# EUROPEAN PATENT SPECIFICATION

(11) **EP 2 486 188 B1**
(45) Date of publication and mention of the grant of the patent: **18.05.2016**
(21) Application number: 10821624.3
(22) Date of filing: 07.10.2010
(51) Int. Cl.: D21H 17/70, D21H 17/69, C08L 5/00

(54) **A METHOD FOR PRECIPITATING CALCIUM CARBONATE AND XYLAN, A PRODUCT PREPARED BY THE METHOD, AND ITS USE**
VERFAHREN ZUR AUSFÄLLUNG VON CALCIUMCARBONAT UND XYLAN, IN DIESEM VERFAHREN HERGESTELLTES PRODUKT UND SEINE VERWENDUNG
PROCÉDÉ POUR PRÉCIPITER LE CARBONATE DE CALCIUM ET LE XYLANE, PRODUIT PRÉPARÉ PAR LE PROCÉDÉ, ET SON UTILISATION

(30) Priority: 09.10.2009 FI 20096050
(43) Date of publication of application: 15.08.2012
(73) Proprietor: UPM-Kymmene Corporation, 00100 Helsinki (FI)
(72) Inventor: SOLISMAA, Päivi, 53130 Lappeenranta (FI); KUKKAMÄKI, Esko, FI-36270 Kangasala (FI)
(74) Representative: Tampereen Patenttitoimisto Oy
(86) International application number: PCT/FI2010/050779
(87) International publication number: WO 2011/042607

(56) References cited:
- WO-A2-2009/103854
- US-A1- 2004 173 329
- US-B1- 6 464 827

## Description

### Field of the invention

The invention relates to a method for precipitating calcium carbonate and xylan. The invention also relates to a PCC/xylan composite and a product containing the same, as well as the use of PCC/xylan composite.

### Background of the invention

PCC is chemically precipitated calcium carbonate CaCO₃. It is prepared, for example, from burnt lime, CaO, which is slaked by reacting it with water. When calcium hydroxide Ca(OH)₂ obtained by the slaking reaction is reacted with a precipitating agent, such as carbon dioxide, precipitated calcium carbonate (PCC) is produced. By varying the process conditions it is possible to alter, for example, the crystalline and granular form of PCC.

The precipitation of calcium carbonate is normally carried out in a batch process by introducing carbon dioxide into a suspension of calcium hydroxide in water, that is, milk of lime, to precipitate the calcium carbonate. Normally, the reaction takes about 1 to 4 h. Precipitated calcium carbonate (PCC) can also be prepared in a continuous process in a fibre or water flow by introducing milk of lime and carbon dioxide into the flow.

PCC is commonly used in papermaking, both as a filler and as a coating pigment, *e.g.* to improve many properties of paper, such as optical properties and printing properties. The addition of the filler also makes it possible to use a smaller quantity of fibre material in the papermaking. The cost savings obtained in this way are normally significantly greater than the costs caused by the addition of the filler. Consequently, it is a common aim to add as much filler as possible into the fibre suspension used for papermaking. However, an increase in the filler content causes a deterioration in the strength properties of paper, among other things.

Methods for precipitating calcium carbonate in the fibre raw material of paper are disclosed, *inter alia,* in U.S. patents US 5,679,220 and US 5,731,080 as well as in European patent EP 1 297 220 and U.S. patent application US 2004/0173329 A1.

### Brief summary of the invention

It is an aim of the present invention to disclose a new method for precipitating calcium carbonate in such a way that xylan can also be precipitated in the calcium carbonate, wherein the method enables the quick precipitation of calcium carbonate and xylan in a simple process arrangement. It is thus an aim of the method according to the invention to prepare a new type of PCC/xylan composite that can be used, among other things, as a filler in papermaking in such a way that it is possible to increase the filler content in paper without impairing the strength properties of paper. Now, it has also been found that the PCC/xylan composite according to the invention can be used as a filler in other products as well, thanks to the surprising properties given by it, such as water retention.

The method according to the invention for precipitating calcium carbonate and xylan is primarily characterized in that the method comprises:
- adding birch pulp, in which the specific surface area of the fibres has been increased, to a solution of calcium hydroxide in water,
- allowing xylan to dissolve from the fibres in the solution of calcium hydroxide in water, and
- bringing the aqueous solution of calcium hydroxide then in contact with carbon dioxide, for precipitating the calcium carbonate and the xylan.

The PCC/xylan composite according to the invention is, in turn, characterized in that it has been made by the method according to claims 1 to 6.

The paper and the product according to the invention, in turn, are characterized in that they contain PCC/xylan composite either as a filler, as a coating pigment, or as another additive.

The invention is based on the fact that in the preparation of precipitated calcium carbonate, not only calcium carbonate but also xylan can be simultaneously precipitated, which has been found to form a so-called composite structure with the precipitated calcium carbonate (PCC). In the method according to the invention, finely ground birch pulp is added to the milk of lime (suspension of calcium hydroxide in water) before the milk of lime is reacted with carbon dioxide for precipitating the calcium carbonate. The addition of birch pulp to the milk of lime causes the dissolution of xylan from the fibres in the milk of lime. For this reason, in the method according to the invention, the carbon dioxide precipitates not only calcium carbonate but also xylan, which forms, when precipitated, a gauzy/filmy structure around the PCC particles and thereby binds the PCC particles to each other. In the present application, the compound formed is called PCC/xylan composite.

Fibres whose specific surface area has been increased with respect to the fibres of the initial pulp are added to the milk of lime. Birch pulp which has been finely ground from conventional birch pulp, preferably nanofibrillated cellulose (NFC) prepared from birch pulp, is added to the milk of lime.

Particularly essential features in the invention are the addition of birch pulp with a large specific surface area into the milk of lime, and its sufficient retention time in the milk of lime before the precipitation with carbon dioxide, so that a sufficient quantity of xylan can be dissolved in the milk of lime. The dissolution of xylan from the fibres in the milk of lime is based on the fact that the pH of the milk of lime (pH about 11 to 12) is suitable for dissolving xylan. When carbon dioxide is introduced into the milk of lime, the pH decreases and the dissolved xylan can be precipitated.

An essential factor on the solubility of xylan in the milk of lime is the degree of beating of the fibres. The specific surface of the fibres must be such that a sufficient quantity of xylan is dissolved from the fibres in the milk of lime during the dissolution step, or the retention time of the fibres in the milk of lime before the precipitation must be sufficiently long for a required/sufficient quantity of xylan to dissolve. Consequently, the time delay between the addition of the fibres to the milk of lime and the precipitation with carbon dioxide will depend substantially on the degree of beating of the fibres. Preferably, in the method according to the invention, nanodimensional cellulose fibres are used, because their large specific surface enables the easy and quick dissolution of xylan from the fibres in the milk of lime. Alternatively, it is also possible to use finely ground birch pulp which is not necessarily nanodimensional.

Another essential factor on the precipitation of calcium carbonate and xylan is the mixing of carbon dioxide in the solution of calcium hydroxide in water, which should take place quickly and efficiently. Advantageously, the substances are mixed by injecting, so that the strong mixing enables an almost complete mixing in a few seconds.

By the method according to the invention, PCC/xylan composite can be prepared either in a continuous process or in a batch process. Preferably, the precipitation is carried out in a continuous process. In a continuous precipitation process, a) carbon dioxide and b) milk of lime, to which birch pulp has been added, are injected into a flow of water or fibres by strong mixing, wherein the precipitation takes place in a continuous flow. When calcium carbonate and xylan are precipitated in a flow of water, it is possible to prepare a composite that contains calcium carbonate and xylan. When calcium carbonate and xylan are precipitated in a flow of fibres in a papermaking process, the PCC/xylan composite formed can also be precipitated on the surface of fibres, which further improves the retention of the filler and the strength of the paper to be manufactured.

The use of PCC/xylan composite made by the method of the invention as a filler and/or a coating pigment in papermaking will improve the properties of the paper. For example, the strength properties of the paper can be improved. Furthermore, the filler content of the paper can be increased without impairing the strength of the paper. Moreover, by adding PCC/xylan composite prepared by the method according to the invention into paper, the paper to be produced can be made almost impermeable to air, depending on the content of xylan.

The PCC/xylan composite according to the invention can thus be used as a filler and/or a coating pigment in the manufacture of paper and cardboard.

Thanks to the good strength properties and effects on the density of the paper achieved by adding PCC/xylan composite according to the invention, it can be used in a variety of product applications.

The properties of the PCC/xylan composite according to the invention can also be utilized in product applications other than paper and cardboard. It can be utilized, for example, as an additive in a variety of products, to provide the product with a dense layer or dense layers. This can be utilized, for example, in the coatings of products of the packaging industry, as well as in various hygienic and fabric products.

An advantage of the method according to the invention is its simplicity. The method can be implemented with existing process apparatuses, and in the method, there is no need to use, for example, any extra chemicals for adjusting the pH, to make xylan dissolve from the fibres in the milk of lime. Consequently, the method according to the invention can be easily integrated, for example, in the papermaking process. Furthermore, thanks to the simplicity of the method, there is no need to use any substances or chemicals which do not end up in the final product to be formed, that is, the PCC/xylan composite. For this reason, for preparing the PCC/xylan composite, neither is there any need for any extra chemical recovery cycles in the production process.

### Description of the drawings

In the following, the invention will be described in more detail with reference to the appended drawings, in which
- Fig. 1: shows a continuous process of precipitating calcium carbonate, used as a reference in Example 1, in a schematic view;
- Fig. 2: shows a continuous precipitating process according to the invention, applied in Example 1, in a schematic view;
- Fig. 3: shows calcium carbonate particles precipitated by a method of reference (Fig. 1);
- Fig. 4: shows PCC/xylan composite precipitated by the method of the invention, PCC:NFC ratio 4:1;
- Fig. 5: shows PCC/xylan composite precipitated by the method of the invention, PCC:NFC ratio 2:1;
- Fig. 6: shows the tensile indices of sheets containing different fillers;
- Fig. 7: shows the tear indices of sheets containing different fillers;
- Fig. 8: shows the bond strengths measured from sheets containing different fillers;
- Fig. 9: shows the air permeabilities measured from sheets containing different fillers; and
- Fig. 10: shows the dewatering times measured from sheets containing different fillers.

### Detailed description of the invention

The precipitation of calcium carbonate and xylan according to the invention for preparing PCC/xylan composite can be performed either in a batch process or in a continuous process. In the batch process, birch pulp is first added into a reactor that contains an aqueous solution of Ca(OH)₂, that is, milk of lime, so that the xylan in the fibres is dissolved in the milk of lime. After a given period of time, carbon dioxide is introduced into the reactor, for precipitating calcium carbonate and xylan. Carbon dioxide is introduced into the reactor as long as all the milk of lime and the xylan have been precipitated to PCC/xylan composite.

Alternatively, the precipitation of calcium carbonate and xylan is performed in a continuous process in a so-called tube reactor. Calcium carbonate and xylan can be precipitated in a flow by injecting carbon dioxide and milk of lime, in which xylan has been dissolved, into the flow. The carbon dioxide can be injected into the flow either before or after the addition of the milk of lime, or they can be both be injected simultaneously. In the injecting, it is essential that it can be used to produce strong mixing which enables an almost complete mixing of carbon dioxide and milk of lime in a few seconds, resulting in the precipitation and the formation of PCC/xylan composite in a few seconds. Preferably, the mixing takes place in less than 5 seconds.

The continuous precipitation of calcium carbonate and xylan can be performed either in a flow of fibres (the PCC/xylan composite is simultaneously mixed in the fibrous pulp) or in a flow of water (yielding PCC/xylan composite that can be used later on). The precipitation can be carried out, for example, in a separate side flow in a paper machine. The side flow may be a side flow separated from the main pulp flow entering the papermaking, or a flow containing fractionated pulp, to be combined with the main pulp flow later on. The fractionated pulp may be a short fibre fraction or a long fibre fraction. In fact, PCC/xylan composite can be precipitated in the above-described manner into any pulp flow which will later end up in the forming section of the paper machine and constitutes at least part of the raw materials for paper.

In the invention, birch pulp is used, because xylan is found most abundantly in hardwood. In the milk of lime, it is possible to admix finely ground birch pulp (freeness value CSF lower than 80 ml, preferably about 60 ml), and most preferably nanocellulose made of birch pulp, before the precipitation.

Nanocellulose refers to cellulose nanofibrils made of cellulose fibres. Nanocellulose is made of cellulose fibres by combining a chemical or enzymatic treatment with mechanical refining. Nanocellulose can also be called nanofibrillated cellulose (NFC), cellulose nanofibrils (CNF) or microfibrillated cellulose (MFC).

In view of the precipitation reaction according to the invention, it is essential that the retention time of birch pulp in the milk of lime is sufficient for the dissolution of xylan before the milk of lime is reacted with carbon dioxide. The sufficient retention time for the dissolution of xylan will depend on the degree of beating of the birch pulp. The cellulose fibres in finely refined birch pulp have a greater specific surface area than normal cellulose fibres. In particular, nanocellulose fibres have a significantly greater specific surface area than normal cellulose fibres, so that when nanocellulose is used, xylan can be dissolved in the milk of lime in a faster and easier way. For example, in the case of nanocellulose, the nanocellulose is added to the milk of lime about 0.5 to 1 h before the precipitation with carbon dioxide, but even a shorter retention time, for example only 5 min, will be sufficient to dissolve xylan. The retention time also affects the quantity of dissolving xylan and thereby the quantity of xylan to be precipitated.

The pH of the milk of lime is about 11 to 12, which is sufficient for dissolving xylan from the fibres. Consequently, there is no need to add other chemicals to the milk of lime, for example for adjusting the pH.

The reactive mineral substance used in the method of the invention is calcium hydroxide (Ca(OH)₂), wherein so-called precipitated calcium carbonate (PCC) is precipitated.

The precipitating chemical used is carbon dioxide. Thus, a carbon dioxide containing gas, such as pure or almost pure carbon dioxide (CO₂) or flue gas or another gas suitable for the purpose is introduced into the precipitating reactor or the flow.

Test runs of the method according to the invention and the use of PCC made by the method according to the invention as a filler in paper sheets, and test results on these sheets will be presented in the following examples.

### Example 1

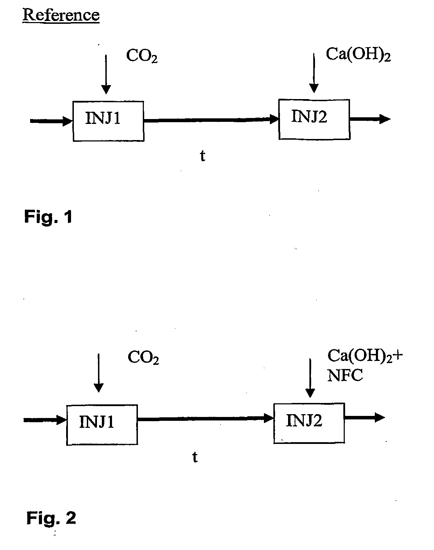

The test runs were carried out in a continuous tube reactor. Figure 1 shows the method of preparing precipitated calcium carbonate in a tube reactor, used as a reference in this example. In the tube reactor, first carbon dioxide and then an aqueous solution of calcium hydroxide were injected into the flow of water. Figure 2 illustrates the method according to the invention, in which first carbon dioxide and then milk of lime, to which nanofibrillated cellulose (NFC) was previously added, were injected into a flow of water in a tube reactor. The carbon dioxide and the milk of lime were injected into the flow in such a way that an almost complete mixing of the substances was achieved in a few seconds. In the figures, INJ1 refers to the injection of carbon dioxide into the flow, and INJ2 refers to the injection of milk of lime or a mixture of milk of lime and nanocellulose. The delay t between the injection steps may be in the order of a few seconds, for example less than 5 s. The mixture of milk of lime and birch cellulose fibres, and the carbon dioxide are brought into contact to each other in an injection mixture, in which a second flow is combined with the flow, to produce a quick mixing of the flows.

In test runs, nanofibrillated cellulose (NFC) was used, which was made of non-dried birch pulp by a Masuko refiner. Pulp in a consistency of 2 to 5 % was supplied into the refiner, and the refining was repeated five times.

NFC was added to the milk of lime, and the obtained mixture was injected into a flow of water about four seconds after the injection of carbon dioxide into the flow. The delay between the addition of NFC into the milk of lime and the injection of the mixture was about 0.5 to 1 hour in the test runs.

The content of milk of lime was calculated such that the PCC:NFC ratio in the final product was about 4:1 or 2:1.

The quantities proportioned in the test runs in the tube reactor are given in the following table.

| | Ca(OH)₂ concentration, % | NFC concentration, % | Ca(OH)₂ or Ca(OH)₂ +NFC proportioning, 1/s | CO₂ proportioning, kg/h |
|---|---|---|---|---|
| REF | 2.0 | 0 | 0.2 | 8.8 |
| PCC:NFC 4:1 | 2.0 | 0.7 | 0.2 | 8.8 |
| PCC:NFC 2:1 | 1.6 | 1.0 | 0.2 | 6.9 |

The flow rate of the main process flow (water flow) in the tube reactor was about 2 I/s. The pressure in the reactor was about 5.6 bar, the temperature about 42.5°C, and the pH of the final product was about 6.8 to 7.

Finally, carbon dioxide (1 kg/h for 2 min per 60 I) was added into the samples, to complete the carbonation reaction. After this, 120 I of the sample was left to stand overnight. The next day, after the filler had settled on the bottom of the container, excess water was decanted off.

The decanted samples were used as filler in laboratory sheets. 30% of softwood pulp and 70% of hardwood pulp were used in the sheets. The sheets to be manufactured had a target grammage of 80 g/m² and an ash content of 30%. In all the sheets to be made, a retention enhancing agent, Percol 63, was used, which was added 300 g/t. Furthermore, the laboratory sheets were calendered.

The fillers used in the sheets were:
1. **Kymi SPCC, a** commercial filler
2. **Velacarb APCC,** a commercial filler
3. **Continuous PCC,** PCC prepared in a continuous tube reactor (method of Fig. 1)
4. **Continuous PCC:NFC 4:1,** PCC/xylan composite made by the method of the invention in a continuous tube reactor, PCC:NFC ratio 4:1
5. **Continuous PCC:NFC 2:1,** PCC/xylan composite made by the method of the invention in a continuous tube reactor, PCC:NFC ratio 2:1
6. **PCC:NFC 2.5:1(lab),** PCC made in a batch process in a laboratory, PCC:NFC ratio 2,5:1
7. **Continuous PCC+NFC 2:1(lab),** NFC admixed to PCC made in a continuous tube reactor, PCC:NFC ratio 2:1
8. **Continuous PCC+starch,** PCC made in a continuous tube reactor, cationic starch (Amylofax, content about 5%) added to the flow.

The references used for the PCC/xylan composite according to the invention were two commercial grades of calcium carbonate (Kymi SPCC and Velacarb APCC), PCC precipitated in a continuous process without an addition of NFC (Continuous PCC), PCC admixed with nanocellulose after the precipitation reaction (Continuous PCC+NFC 2:1(lab)), as well as the combination of PCC and starch (Continuous PCC + starch).

The filler under point 6 (PCC:NFC 2,5:1(lab)) was prepared in a batch process in a laboratory in such a way that milk of lime and nanocellulose were added into the reactor, and immediately after that (without a delay) the supply of carbon dioxide into the reactor was started. In this case, no xylan could dissolve from the nanocellulose fibres in the milk of lime. This is because carbon dioxide reduces the pH of the solution, so that no xylan will dissolve after the addition of carbon dioxide.

### Results

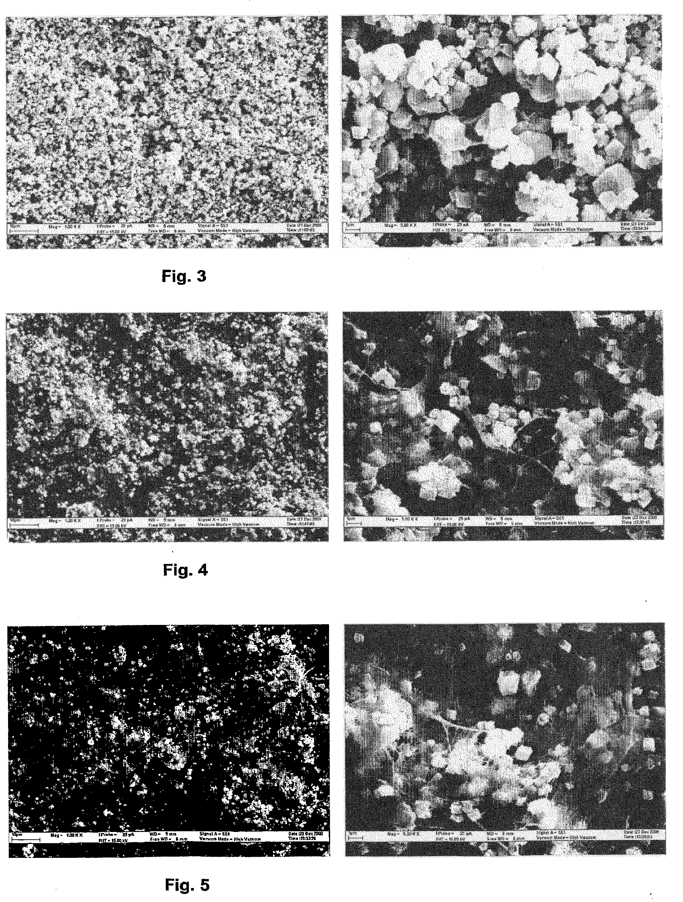

Figures 3 to 5 show precipitated calcium carbonate particles and PCC/xylan composite according to the invention in scanning electron microscope (SEM) images. Figure 3 shows conventional calcium carbonate particles prepared by the method of Fig. 1. As can be seen from the figure, single PCC particles are precipitated in the reactor.

Figures 4 and 5 show calcium carbonate particles precipitated in a continuous flow by the method according to the invention. As can be seen from the figures, not only calcium carbonate but also xylan is precipitated in the reactor, forming a gauzy structure around the PCC particles. In addition to the precipitated film of xylan, there is also a web of nanofibres among the PCC particles, enhancing the binding of the PCC particles to each other.

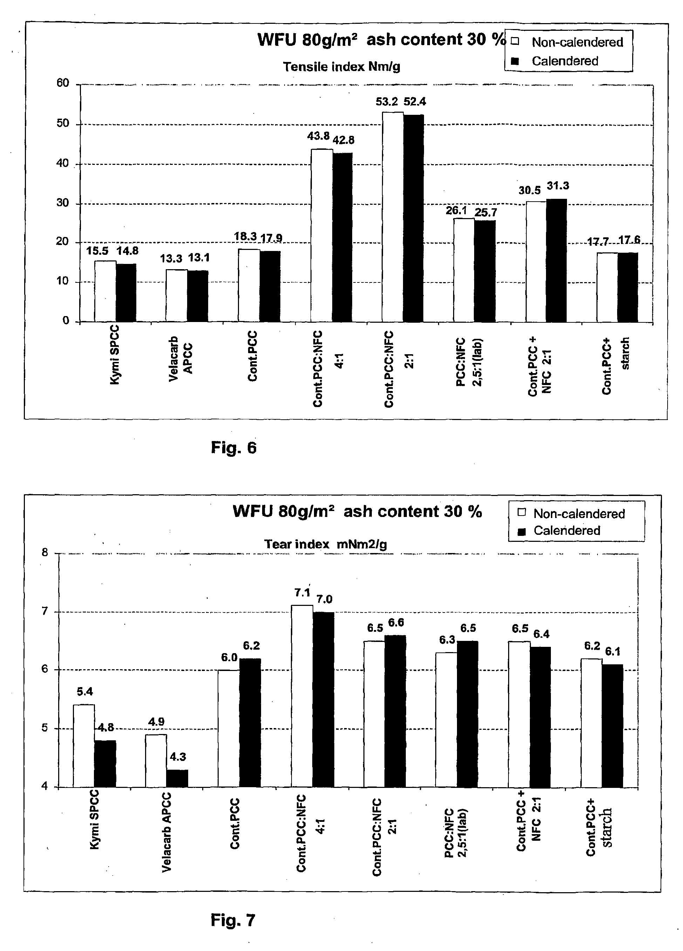

Figure 6 shows the tensile indices measured from sheets, both calendered and non-calendered, containing the different fillers. The sheets containing PCC/xylan composite made by the method according to the invention have a significantly better tensile strength than the other sheets.

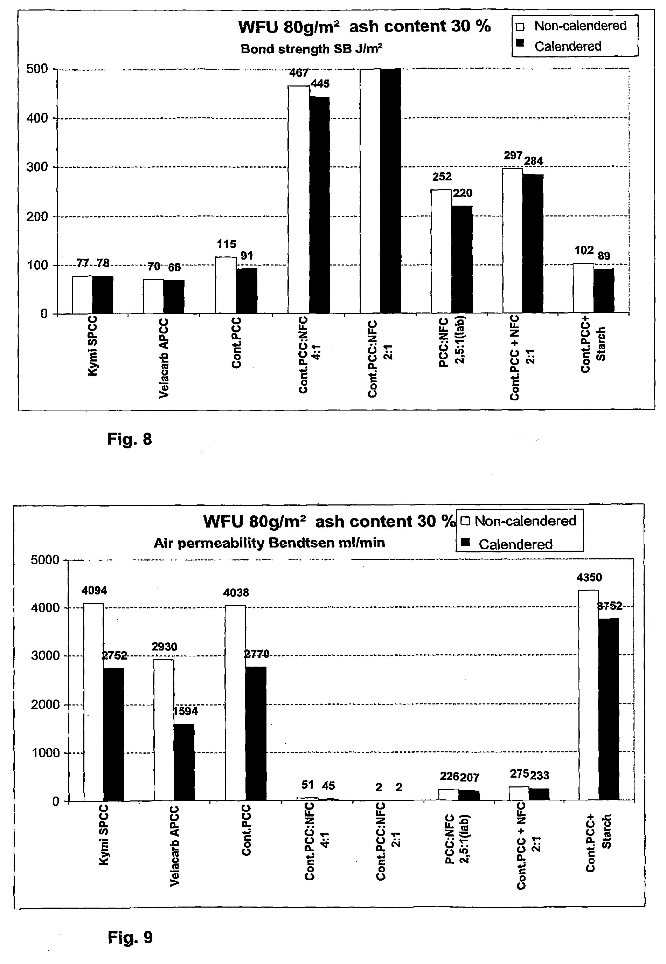

Figure 7 shows the tear strengths measured from the different sheets. As can be seen from the figure, the PCC/xylan composite according to the invention also improves the tear strength to some extent, but the PCC/xylan composite according to the invention improved the bond strength significantly more, as can be seen from Fig. 8.

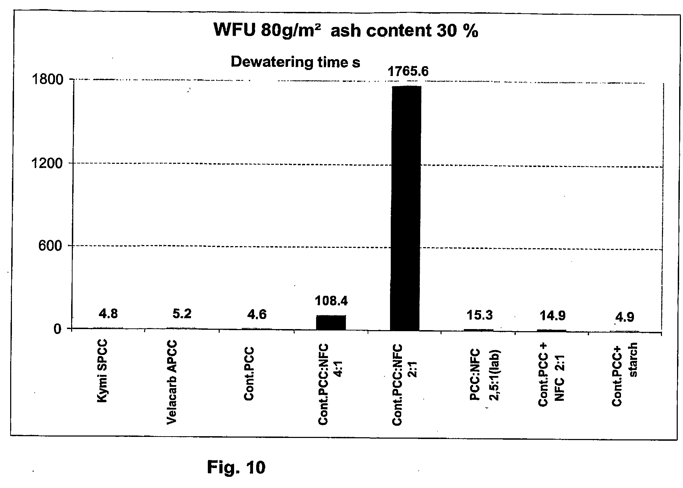

Figure 9 shows air permeabilities measured from the different sheets. It can be noticed that the PCC/xylan composite of the invention makes the sheet almost impermeable to air. Furthermore, the dewatering times of the different sheets (Fig. 10) were measured, and it was found that the dewatering times of sheets containing the composite made by the method of the invention were significantly longer than those of the other sheets. The PCC/xylan composite does not necessarily need to be added as a filler to the product, as in the present example, but it can be used as a coating agent or another additive, for example to form a water retaining layer or layers.

### Example 2

The test arrangements were the same as in the tests carried out with NFC. Birch pulp (initial freeness 595) was refined by a Voith-Sulzer laboratory refiner to an end freeness value of 60 ml (CSF), and to the finely ground birch pulp obtained in this way, calcium carbonate was precipitated after milk of lime had been allowed to act on it with the same retention time as in the tests carried out with NFC. The quantities proportioned in the test runs in the tube reactor are given in the following table: (birch = finely ground birch pulp, freeness 60).

| | Ca(OH)₂ concentration, % | birch concentration, % | Ca(OH)₂ or Ca(OH)₂ +NFC proportioning, 1/s | CO₂ proportioning, kg/h |
|---|---|---|---|---|
| PCC:birch 4:1 | 2.0 | 0.68 | 0.2 | 8:8 |
| PCC:NFC 10:1 | 2.0 | 0.27 | 0.2 | 8.8 |

From the samples made of finely ground birch pulp, xylan film could also be detected, but it was not as distinct as with NFC and it could only be detected in places. The tests showed, however, that xylan can also be dissolved from finely ground birch pulp treated with milk of lime, and it can be precipitated at the same time when calcium carbonate is precipitated by means of carbon dioxide.

Laboratory sheets, for which finely ground birch pulp had been used to give the same calcium carbonate filler content as with NFC, had a significantly shorter dewatering time than for NFC (Fig. 10), in the order of 7 to 8 s (filler PCC:birch 4:1 of example 2), but the tensile index was still higher than for the references (Fig. 6), in the order of 30 Nm/g. Consequently, using a suitable xylan/PCC composite and a suitable proportioning, it is possible to find an optimum between the short dewatering time required by the papermaking process and the strength of the paper made.

## Claims

1. A method for precipitating calcium carbonate and xylan, comprising:
- adding hardwood pulp, in which the specific surface area of the fibres has been increased, to a solution of calcium hydroxide in water,
- allowing xylan to dissolve from the fibres in the solution of calcium hydroxide in water, and
- bringing the aqueous solution of calcium hydroxide then in contact with carbon dioxide, for precipitating calcium carbonate and xylan.

2. The method according to claim 1, **characterized in that** the hardwood pulp is added to the aqueous solution of calcium hydroxide before the precipitation by means of carbon dioxide.

3. The method according to claim 1 or 2, **characterized in that** the precipitation of calcium carbonate and xylan is carried out in a fibre or water flow by injecting carbon dioxide and an aqueous solution of calcium hydroxide, to which hardwood pulp has been added, into the flow.

4. The method according to claim 3, **characterized in that** the carbon dioxide and the aqueous solution of calcium hydroxide, containing hardwood pulp, are injected into the flow in such a way that they are mixed in the flow almost completely in a few seconds.

5. The method according to any of the preceding claims, **characterized in that** finely ground hardwood pulp, preferably nanocellulose made of hardwood pulp, is added into the aqueous solution of calcium hydroxide.

6. The method according to any of the preceding claims, **characterized in that** the precipitation is carried out in a separate side flow in a paper machine.

7. A composite material comprising precipitated calcium carbonate and xylan.

8. The use of the PCC/xylan composite according to claim 7 as a filler and/or a coating pigment for paper or cardboard.

9. The use of the PCC/xylan composite according to claim 7 for forming a dense layer or dense layers in a product.

10. Paper comprising PCC/xylan composite made by the method according to any of the claims 1 to 6.

11. A product comprising PCC/xylan composite made by the method according to any of the claims 1 to 6.

## Patentansprüche

1. Verfahren zum Ausfällen von Calciumcarbonat und Xylan, welches Folgendes umfasst:
- Zusetzen von Laubholzzellstoff, bei welchem die spezifische Oberfläche der Fasern erhöht wurde, zu einer Lösung von Calciumhydroxid in Wasser,
- Herauslösenlassen des Xylans aus den Fasern in die Lösung von Calciumhydroxid in Wasser, und
- anschließendes Inkontaktbringen der wässrigen Lösung von Calciumhydroxid mit Kohlendioxid, um Calciumcarbonat und Xylan auszufällen.

2. Verfahren nach Anspruch 1, **dadurch gekennzeichnet, dass** der Laubholzzellstoff der wässrigen Lösung von Calciumhydroxid zugesetzt wird, bevor das Ausfällen mittels Kohlendioxid erfolgt.

3. Verfahren nach Anspruch 1 oder 2, **dadurch gekennzeichnet, dass** das Ausfällen von Calciumcarbonat und Xylan in einem Faser- oder Wasserstrom durchgeführt wird, indem Kohlendioxid und eine wässrige Lösung von Calciumhydroxid, welcher Laubholzzellstoff zugesetzt wurden, in den Strom eingeleitet werden.

4. Verfahren nach Anspruch 3, **dadurch gekennzeichnet, dass** das Kohlendioxid und die wässrige Lösung von Calciumhydroxid, welche Laubholzzellstoff enthält, derart in den Strom eingeleitet werden, dass sie sich innerhalb weniger Sekunden nahezu vollständig mit dem Strom vermischen.

5. Verfahren nach einem beliebigen der vorhergehenden Ansprüche, **dadurch gekennzeichnet, dass** der wässrigen Lösung von Calciumhydroxid fein zerkleinerter Laubholzzellstoff, vorzugsweise Nanozellulose, die aus Laubholzzellstoff hergestellt wurde, zugesetzt wird.

6. Verfahren nach einem beliebigen der vorhergehenden Ansprüche, **dadurch gekennzeichnet, dass** das Ausfällen innerhalb einer Papiermaschine in einem gesonderten Nebenstrom durchgeführt wird.

7. Verbundwerkstoff, der ausgefälltes Calciumcarbonat und Xylan umfasst.

8. Verwendung des PCC/Xylan-Verbundstoffs nach Anspruch 7 als Füllstoff und/oder Streichpigment für Papier oder Pappe.

9. Verwendung des PCC/Xylan-Verbundstoffs nach Anspruch 7 zur Bildung einer dichten Lage oder von dichten Lagen in einem Produkt.

10. Papier, das einen PCC/Xylan-Verbundstoff umfasst, welcher mittels des Verfahrens nach einem beliebigen den Ansprüche 1 bis 6 hergestellt wurde.

11. Produkt, das einen PCC/Xylan-Verbundstoff umfasst, welcher mittels des Verfahrens nach einem beliebigen den Ansprüche 1 bis 6 hergestellt wurde.

## Revendications

1. Procédé pour précipiter du carbonate de calcium et du xylane, comprenant le fait de :
- ajouter de la pâte de bois dur, dans laquelle on a augmenté l'aire de surface spécifique des fibres, à une solution d'hydroxyde de calcium dans de l'eau ;
- laisser le xylane se dissoudre à partir des fibres dans la solution d'hydroxyde de calcium dans de l'eau , et
- amener ensuite la solution aqueuse d'hydroxyde de calcium en contact avec du dioxyde de carbone pour la précipitation du carbonate de calcium et du xylane.

2. Procédé selon la revendication 1, **caractérisé en ce qu'**on ajoute la pâte de bois dur à la solution aqueuse d'hydroxyde de calcium avant la précipitation au moyen de dioxyde de carbone.

3. Procédé selon la revendication 1 ou 2, **caractérisé en ce qu'**on met en oeuvre la précipitation du carbonate de calcium et du xylane dans un courant de fibres ou d'eau en injectant du dioxyde de carbone et une solution aqueuse d'hydroxyde de calcium, à laquelle on a ajouté de la pâte de bois dur, dans le courant.

4. Procédé selon la revendication 3, **caractérisé en ce qu'**on injecte le dioxyde de carbone et la solution aqueuse d'hydroxyde de calcium, contenant de la pâte de bois dur, dans le courant d'une manière telle que l'on obtient leur mélange pratiquement complet dans le courant en quelques secondes.

5. Procédé selon l'une quelconque des revendications précédentes, **caractérisé en ce qu'**on ajoute de la pâte de bois dur finement broyée, de préférence de la nanocellulose obtenue à partir de pâte de bois dur, dans la solution aqueuse d'hydroxyde de calcium.

6. Procédé selon l'une quelconque des revendications précédentes, **caractérisé en ce qu'**on met en oeuvre la précipitation dans un courant latéral séparé dans une machine de fabrication du papier.

7. Matériau composite comprenant du carbonate de calcium précipité et du xylane.

8. Utilisation du composite PCC/xylane selon la revendication 7, à titre de matière de charge et/ou de pigment d'enduction pour du papier ou du carton.

9. Utilisation du composite PCC/xylane selon la revendication 7, pour former une couche dense ou des couches denses dans un produit.

10. Papier comprenant un composite de PCC/xylane que l'on obtient conformément au procédé selon l'une quelconque des revendications 1 à 6.

11. Produit comprenant un composite de PCC/xylane que l'on obtient conformément au procédé selon l'une quelconque des revendications 1 à 6.
